# FASCICULE DE BREVET EUROPEEN

(11) **EP 3 174 699 B1**
(45) Date de publication et mention de la délivrance du brevet: **09.10.2019**
(21) Numéro de dépôt: 15756238.0
(22) Date de dépôt: 21.07.2015
(51) Int. Cl.: B29D 30/06, B29C 33/38, B29L 30/00, B22C 7/00, B29C 33/42

(54) **MATRICE AVEC INSERTS TEXTURÉS POUR FABRICATION D'UN MOULE TEXTURÉ POUR MOULAGE ET VULCANISATION DE PNEUMATIQUES**
PRÄGEPLATTE MIT TEXTURIERTEN EINSÄTZEN ZUR HERSTELLUNG EINER TEXTURIERTEN FORM ZUM FORMEN UND VULKANISIEREN VON REIFEN
DIE WITH TEXTURED INSERTS FOR THE PRODUCTION OF A TEXTURED MOULD FOR THE MOULDING AND CURING OF TYRES

(30) Priorité: 30.07.2014 FR 1401754
(43) Date de publication de la demande: 07.06.2017
(73) Titulaire: Compagnie Générale des Etablissements Michelin, 63000 Clermont-Ferrand (FR)
(72) Inventeur: VILLENEUVE, Bernard, F-63040 Clermont-Ferrand Cedex 9 (FR); FRAENKEL, Anne-Laure, F-63040 Clermont-Ferrand Cedex 9 (FR); EMORINE, Hélène, F-63040 Clermont-Ferrand Cedex 9 (FR); LEJEUNE, Jonathan, F-63040 Clermont-Ferrand Cedex 9 (FR)
(74) Mandataire: Demaure, Pierre-Yves
(86) Numéro de dépôt international: PCT/IB2015/001209
(87) Numéro de publication internationale: WO 2016/016698

(56) Documents cités:
- EP-A1- 0 858 915
- EP-A2- 1 393 849
- WO-A1-95/18022
- WO-A1-2010/096072
- WO-A2-2010/072961
- JP-A- 2001 150 444
- US-B1- 6 505 661
- US-B1- 6 551 086

## Description

### DOMAINE TECHNIQUE DE L'INVENTION

La présente invention concerne une matrice représentant un modèle de sculptures d'une bande de roulement d'un pneumatique à mouler. Elle prévoit également un procédé de fabrication d'un moule pour moulage et vulcanisation de pneumatiques.

### ETAT DE LA TECHNIQUE ANTERIEURE

Le document WO2010072961 décrit une matrice pour la fabrication d'un moule de pneumatique réalisée par frittage laser. Grâce à ce mode de fabrication, la pièce à fabriquer peut être modélisée par ordinateur et facilement fabriquée sur la base de cette modélisation. Le document décrit toutefois un élément monopièce, dont la conception et la fabrication doivent être revus dès qu'un changement architectural ou dimensionnel intervient sur le produit final à mouler. En outre, les pièces de grande dimension fabriquées par ce procédé sont relativement coûteuses à réaliser, principalement dû au fait que les matières de base sont spécifiques au mode de fabrication.

La demande WO 2010/096072 A1 concerne un procédé de moulage par coulée, utiles dans le cadre de la fabrication d'objets micro-texturés. L'introduction d'une pluralité de micro-motifs sur la surface d'un objet permet d'ajouter à l'objet micro-texturé certaines caractéristiques, comme par exemple une augmentation de l'hydrophobicité. Certains des procédés de coulée et de moulage décrits dans ce document permettent d'aboutir à la fabrication d'objets présentant à la fois des macro et micro caractéristiques, comme par exemple des micro-motifs à l'intérieur ou sur des zones à macro caractéristiques. Le procédé ici décrit est exclusivement utilisé sur des surfaces courbées.

Le document US2263001 décrit un procédé de moulage par vulcanisation de pneumatiques. Le procédé utilise un support comportant un noyau en plâtre auquel sont fixées une pluralité de plaques fines. Une partie des plaques sont noyées dans le plâtre, une autre partie des plaques font saillie du plâtre. Le noyau est placé dans un moule et du métal fondu est coulé dans le moule autour des plaques fines extérieures au noyau. Ainsi les parties extérieures sont ancrées dans la coulée de moulage afin de permettre le moulage des fentes de la bande de roulement.

Le document EP0858915 divulgue un pneumatique comportant une structure particulière en fond de sillon.

Le document W02010072961 divulgue un procédé de réalisation d'une garniture finale à partir d'une matrice intermédiaire.

Il existe donc un besoin pour une solution permettant de produire des matrices à des coûts moindres, permettant à la fois de prendre en compte les évolutions du produit final et les exigences de plus en plus fortes concernant les caractéristiques de formes, de dimensions et de précision des différentes zones des matrices.

Pour pallier ces différents inconvénients, l'invention prévoit différents moyens techniques.

### EXPOSE DE L'INVENTION

Tout d'abord, un premier objet de l'invention consiste à prévoir une matrice représentant un modèle de sculptures de bande de roulement de pneumatique comportant des éléments de textures sensiblement complexes et/ou de très petites dimensions avec une très grande précision et à des coûts attrayants.

Un autre objet de l'invention consiste à prévoir un procédé de fabrication de moules pour moulage et vulcanisation de pneumatiques permettant d'obtenir plusieurs moules comportant chacun un haut niveau de qualité, à des coûts avantageux.

Pour ce faire, l'invention prévoit une matrice représentant un modèle de sculptures d'une bande de roulement d'un pneumatique à mouler, ladite matrice étant constituée d'un corps de matrice pourvu de sillons et d'au moins un insert rapporté sur le corps de ladite matrice, ledit insert recouvrant au moins une des surfaces des sillons du corps, l'insert comportant au moins une surface sensiblement plane pourvue de textures. Les textures des inserts sont fabriquées par impression 3D ou usinage laser, ou à l'aide de poinçons, ou par fusion sélective de poudre métallique, ou par électro-érosion. La matrice comprend au moins deux inserts adjacents recouvrant deux surfaces formant des plans généralement distincts. Les plans distincts sont disposés en forme de L. Les au moins deux inserts sont pourvus de textures distinctes et les inserts sont fabriqués séparément, dans des conditions permettant la mise en forme des textures, puis rapportés sur le corps de la matrice et en ce que la fixation des inserts est par vissage.

Selon une telle architecture, il est possible de réaliser une matrice portant des surfaces texturées de très haute précision, même si les surfaces texturées sont difficiles d'accès. Par ailleurs, une seule matrice permet de fabriquer plusieurs moules, rendant le concept particulièrement avantageux.

Dans une variante de réalisation, l'insert recouvre également au moins une des surfaces des sommets de sculptures du corps.

Egalement de manière avantageuse, la matrice comprend trois inserts adjacents recouvrant trois surfaces formant des plans généralement distincts.

Selon encore un autre mode de réalisation, les plans distincts sont disposés en forme de « U » dans la matrice.

Selon encore un autre mode de réalisation, les textures comprennent une pluralité d'éléments en creux ou en protubérance venus de matière avec la matrice.

Selon un autre mode de réalisation avantageux, tout ou partie des textures est formé par des cônes répartis dans la texture selon une densité au moins égale à un cône par millimètre carré (mm²), chaque cône ayant une section moyenne comprise entre 0,0005 mm² et 1 mm².

Selon encore un autre mode de réalisation, tout ou partie des textures sont des stries sensiblement parallèles entre elles, le pas des stries dans le motif étant au plus égal à 0,5 mm, chaque strie ayant une largeur moyenne comprise entre 0,02 mm et 0,5 mm.

Selon un autre mode de réalisation avantageux, tout ou partie des textures forment des parallélépipèdes de côté compris entre 0,05 mm et 0,5 mm, de hauteur comprise entre 0,05 mm et 0,5 mm, la distance entre deux parallélépipèdes adjacents dans la texture étant comprise entre 0,05 mm et 0.5 mm.

Selon un autre mode de réalisation avantageux, les éléments en protubérance forment des brins, lesdits brins étant répartis dans le motif selon une densité au moins égale à un brin par millimètre carré (mm²), chaque brin ayant une section moyenne S comprise entre 0,0005 mm² et 1 mm².

Selon encore un autre mode de réalisation avantageux, les éléments en protubérance forment des lames parallèles entre elles, le pas des lames dans le motif étant au plus égal à 0,5 mm, chaque lame ayant une largeur moyenne comprise entre 0,02 mm et 0,5 mm.

Selon encore un autre mode de réalisation, les éléments en creux ou en protubérance présentent des formes et des distances variables entre eux.

De manière avantageuse, les textures des inserts sont fabriquées par impression 3D ou usinage laser, ou à l'aide de poinçons, ou par fusion sélective de poudre métallique, ou par électro-érosion.

### DESCRIPTION DES FIGURES

Tous les détails de réalisation sont donnés dans la description qui suit, complétée par les figures 1 à 13b, présentées uniquement à des fins d'exemples non limitatifs, et dans lesquelles :
- la figure 1 est une vue en perspective d'une portion d'un exemple de matrice selon l'invention ;
- la figure 2a présente une vue en perspective d'une portion de matrice constituée d'un corps de matrice et d'une surface de sillon, avant intégration des inserts ;
- la figure 2b présente une vue de profil de la matrice de la figure 2a ;
- les figures 3 et 4 illustrent des exemples d'agencements d'inserts pour matrices ;
- la figure 5a est une vue en perspective d'un agencement d'inserts en forme de « U » ;
- la figure 5b est une vue agrandie d'une zone texturée de l'agencement de la figure 5a ;
- les figures 6 à 11 illustrent divers exemples de types de texture susceptibles d'être agencées sur un insert selon l'invention ;
- la figure 12 présente un diagramme illustrant les principales étapes pour la fabrication d'un moule pour moulage et vulcanisation d'un pneumatique à partir d'une matrice selon l'invention ;
- la figure 13a illustre une variante de réalisation dans laquelle des inserts se prolongent au-delà de la surface d'un sillon afin de recouvrir au moins une portion du sommet d'un élément de sculpture ;
- la figure 13b illustre une autre variante de réalisation dans laquelle des inserts entourent un élément de sculpture sur les parois et sur le sommet.

### DESCRIPTION DETAILLEE DE L'INVENTION

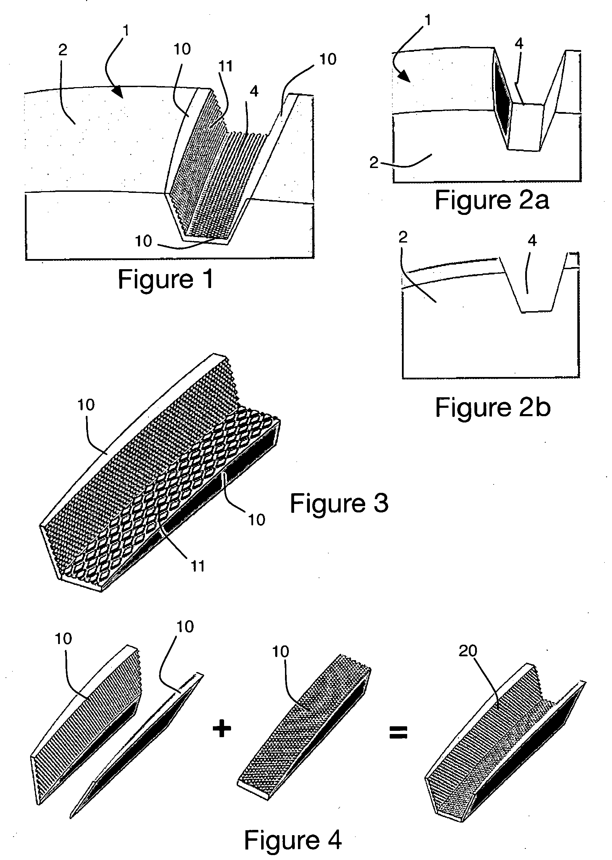

La figure 1 présente une vue en perspective d'une portion d'une matrice 1 selon l'invention pourvue d'un corps 2, et de sillons 4 dont la surface est recouverte de trois inserts 10 agencés en forme de « U », ces inserts étant pourvus de textures 11. Les figures 2a et 2b montrent une zone similaire du corps 2 avant que les inserts ne soient rapportés dans les sillons 4. On constate que les inserts sont avantageusement prévus sur des éléments de sculptures délimitant les sillons. Les inserts sont par ailleurs pourvus de textures de très haute précision, même si les motifs sont complexes et/ou de dimensions relativement petites. En outre, les textures étant réalisées sur des éléments séparés (les inserts), il est possible de prévoir des conditions de fabrication spécifiquement adaptées pour que les niveaux de qualité et de précisions soient assurés de façon constante sur l'ensemble des surfaces, à des coûts particulièrement attractifs. Enfin, à partir d'un corps unique de matrice, le concept permet de réaliser des variantes architecturales dans lesquelles les agencements de textures peuvent varier afin de créer un nombre considérable de variantes à faible coût. Ces agencements peuvent prévoir des textures dont les formes et/ou les dimensions et/ou les répartitions peuvent varier, en fonction des besoins.

Les figures 3 et 4 illustrent des exemples d'agencements d'inserts 10 pourvus de textures 11. Dans l'exemple de la figure 3, les deux inserts 10 sont adjacents et assemblés en forme de « L ». Les deux inserts sont avantageusement pourvus de textures 11 distinctes.

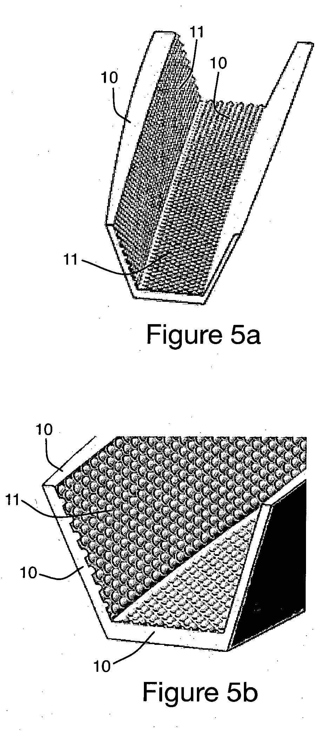

La figure 4 illustre l'assemblage de trois inserts 10 adjacents afin de recouvrir trois surfaces de sillon et ainsi former un « U ». Les inserts sont pourvus de textures 11. L'agencement d'inserts résultant 20 est montré plus en détails aux figures 5a et 5b.

Dans tous ces exemples de réalisation, il est avantageusement prévu que les inserts adjacents soient connectés entre eux avant assemblage avec le corps de la matrice, afin de faciliter l'assemblage final et de réduire les manipulations à effectuer sur la matrice.

La figure 5a présente une vue en perspective d'un agencement de trois inserts en forme de « U ». Les inserts sont pourvus de textures 11. La figure 5b présente une vue en perspective agrandie de l'agencement de la figure 5a où les textures 11 sont aisément visibles. Dans cet exemple, les textures sont constituées de petites surfaces circulaires s'étendant vers les sillons depuis les parois.

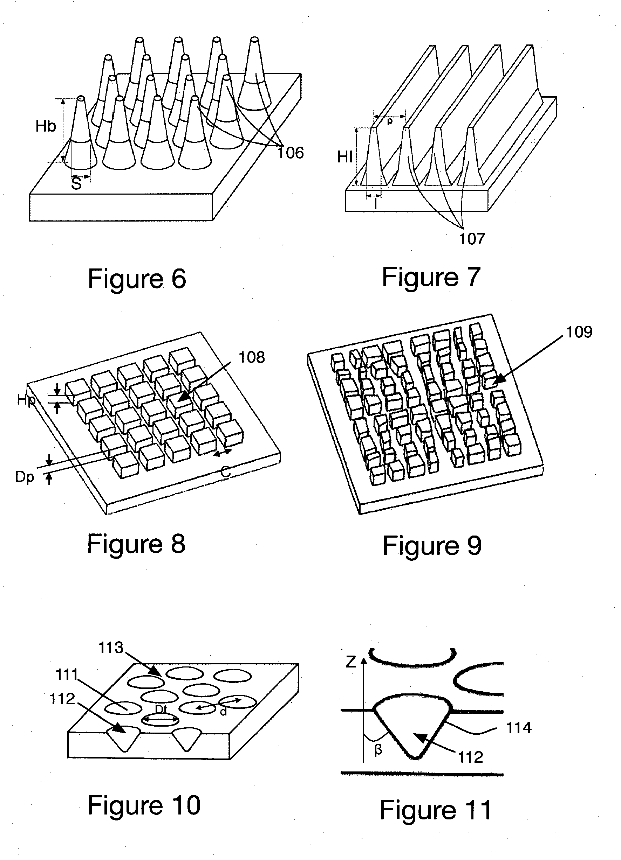

Les figures 6 à 11 illustrent d'autres exemples de textures pouvant être disposées sur une des inserts selon l'invention.

La figure 6 illustre un mode de réalisation dans lequel le motif comporte une pluralité de brins 106. Les brins 106 sont répartis dans le motif selon une densité au moins égale à un brin par mm², chaque brin ayant une section moyenne S comprise entre 0,0005 mm² et 1 mm². On note que la section moyenne de chaque brin correspond à la moyenne des sections S mesurées à intervalles réguliers depuis la base du brin. Les brins 106 ont une forme globalement conique avec une section diminuant dans la hauteur Hb de ces brins.

La figure 7 illustre un mode de réalisation dans lequel le motif comporte une pluralité de lames 107 parallèles entre elles, le pas des lames 107 dans le motif étant au plus égal à 0,5 mm, chaque lame 107 ayant une largeur moyenne comprise entre 0,02 mm et 0,5 mm. On note que la largeur moyenne correspond à la moyenne des largeurs l mesurées à intervalles réguliers dans la hauteur Hl de la lame, la hauteur de chaque lame étant comprise entre 0,05 et 0,5 mm.

Dans une autre variante de réalisation, le motif comporte une combinaison de brins 106 et/ou et de lames 107.

L'invention n'est pas limitée aux exemples décrits et représentés et diverses modifications peuvent y être apportées sans sortir de son cadre. Ainsi, selon une autre variante de réalisation non limitative, les lames 107 de la figure 7 peuvent être discontinues. Elles présentent une partie plane entre elles. Elles peuvent en outre présenter entre elles des différences de section. De plus, les lames peuvent posséder des courbures ou des angles, notamment dans leur longueur. Elles peuvent en outre, être de longueur variable.

Dans l'exemple de la figure 8, les motifs ont une section parallélépipédique 108 de côté C compris entre 0,05 mm et 0,5 mm, de hauteur Hp comprise entre 0,05 mm et 0,5 mm, la distance Dp entre deux cavités adjacentes dans la texture étant comprise entre 0,05 mm et 0.5 mm. En variante la section des motifs peut être circulaire, polygonale (par exemple hexagonale). Avec les structures carrée ou polygonale, il est possible d'organiser plus facilement les éléments les uns par rapport aux autres de sorte à limiter la surface des zones intermédiaires entre les éléments.

Dans la variante de la figure 9, les éléments 109 présentent des formes et des distances variables entre eux. Cette variante permet de rentre moins visible les détails de la texture.

La figure 10 illustre le motif selon une autre variante de réalisation non limitative. Dans cette variante, le motif est formé par une pluralité de cavités 112. Les cavités 112 sont ici en forme de cônes qui s'étendent dans la profondeur du moule et débouchent sur le moule en formant des ouvertures circulaires 111. Les cavités 112 ont ainsi une section qui diminue dans la profondeur du moule. On note que dans cette variante, les ouvertures 111 des cavités 112 ne se touchent pas. Les ouvertures 111 sont séparées par des zones intermédiaires 113. En outre, les ouvertures 111 sont régulièrement réparties sur le moule de sorte que la distance d entre chaque ouverture du motif est globalement similaire.

La figure 11 est une vue agrandie du motif de la figure 10. Tout ou partie des cavités a ici au moins une paroi 114 qui, selon une vue en coupe, forme un angle β compris entre 10° et 60° par rapport à une direction Z perpendiculaire au motif.

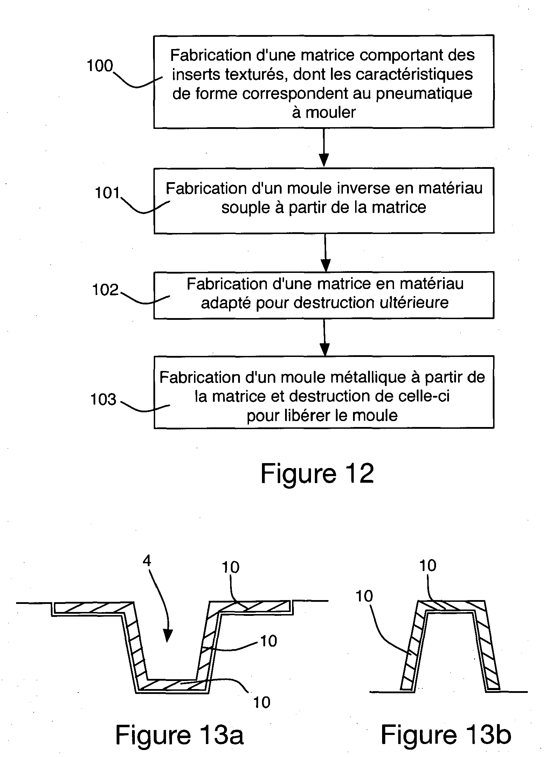

Les figures 13a et 13b sont des vues en coupe agrandies illustrant des variantes de réalisation d'une matrice selon l'invention dans lesquelles des inserts 10 sont agencés de façon spécifiques par rapport à des sillons. Dans l'exemple de la figure 13a, les inserts 10 se prolongent au-delà de la surface d'un sillon 4 afin de recouvrir au moins une portion du sommet d'un élément de sculpture délimitant le sillon. Dans l'exemple de la figure 13b, des inserts 10 entourent un élément de sculpture sur les parois et sur le sommet. Dans une variante non illustrée, les inserts des parois recouvrent uniquement la portion supérieure des parois.

La matrice 1 selon l'invention, les inserts et en particulier la mise en forme des textures 11 peut être réalisée par impression 3D ou usinage laser, à l'aide de poinçons ou par électro-érosion. Une telle matrice présente l'avantage de permettre la fabrication d'une pluralité de moules servant au moulage et à la vulcanisation de pneumatiques. Grâce à la matrice texturée 1 servant de modèle de base, les moules fabriqués sont pourvus de textures inverses à celle de la matrice, conférant aux pneumatiques moulés des textures conformes à celle de la matrice de base, sans devoir prévoir d'étape spécifique d'usinage ultérieur pour le moule ou pour les pneumatiques. Il en résulte une facilité de fabrication particulièrement avantageuse, et des coûts réduits.

Cette matrice ne peut toutefois pas être directement utilisée pour la fabrication industrielle des moules qui permettront de mouler et vulcaniser les pneumatiques. En effet, puisque le moule final est en matériau métallique, donc non souple, la matrice initiale, également non souple, ne peut en général pas servir à produire le moule final, puisque les deux éléments jumelés seraient difficilement séparables. Il est donc prévu, de façon connue, de prévoir une série d'étapes intermédiaires permettant de passer d'une matrice rigide, à une moule intermédiaire souple, puis une matrice facile à retirer une fois le moule définitif métallique produit. Ces différentes étapes sont illustrées à la figure 8.

L'organigramme fonctionnel de la figure 12 présente les principales étapes du procédé de fabrication d'un moule pour moulage et vulcanisation de pneumatique selon l'invention. A l'étape 100, on effectue tout d'abord la fabrication d'une matrice 1, telle que préalablement décrit, comportant des inserts texturées 10, dont les caractéristiques de forme correspondent au pneumatique à mouler. Les inserts sont avantageusement fabriqués séparément, dans des conditions permettant la mise en forme des textures, puis rapportés sur le corps de la matrice. La fixation peut être prévue par collage, vissage, ou autre.

A partir de cette matrice, à l'étape 101, on réalise un moule inverse en matériau souple. Du fait de la souplesse du matériau, le moule obtenu peut être aisément retiré de la matrice 1 qui lui sert à la fois de support et de modèle. A l'étape 102, une autre matrice est fabriquée, cette fois à partir du moule en matériau souple obtenu à l'étape 101. Cette matrice étant sujette à être sacrifiée à une étape subséquente, il est avantageusement prévu de produire la pièce en matériau peu coûteux et facilement destructible, comme par exemple du plâtre. Il est à noter que cette matrice possède un profil correspondant à celui de la matrice 1 initiale.

Une fois la matrice de plâtre obtenue, celle-ci permet de réaliser le moule final métallique (étape 103). La séparation des deux pièces, à savoir le moule métallique et la matrice de matériau friable, s'effectue en cassant la matrice de façon à libérer le moule métallique.

On obtient ainsi un moule métallique qui permettra de reproduire fidèlement les textures de la matrice de base sur les pneumatiques à fabriquer.

### Numéros de référence employés sur les figures

- 1: Matrice
- 2: Corps
- 4: Sillon
- 10: Inserts
- 11: Textures
- 20: Agencement d'inserts
- 106: Brins
- 107: Lames
- 108: Section parallélépipédique
- 109: Eléments
- 111: Ouvertures
- 112: Cavités
- 113: Zones intermédiaires
- 114: Paroi

## Revendications

1. Matrice (1) représentant un modèle de sculptures d'une bande de roulement d'un pneumatique à mouler, ladite matrice étant constituée d'un corps (2) de matrice pourvu de sillons et d'au moins un insert (10) rapporté sur le corps de ladite matrice, recouvrant au moins une des surfaces des sillons (4) du corps (2), l'insert (10) comportant au moins une surface pourvue de textures, les textures étant fabriquées par impression 3D ou usinage laser, ou à l'aide de poinçons, ou par fusion sélective de poudre métallique, ou par électro-érosion, **caractérisé en ce que** la surface de l'insert est sensiblement plane et **en ce que** la matrice comprend au moins deux inserts (10) adjacents recouvrant deux surfaces formant des plans généralement distincts, et **en ce que** les plans distincts sont disposés en forme de L et **en ce que** les au moins deux inserts (10) sont pourvus de textures (11) distinctes et **en ce que les** inserts sont fabriqués séparément, dans des conditions permettant la mise en forme des textures, puis rapportés sur le corps de la matrice et **en ce que** la fixation des inserts est par vissage.

2. Matrice selon la revendication 1, dans laquelle l'insert recouvre également au moins une des surfaces des sommets de sculptures du corps (2).

3. Matrice selon l'une des revendications 1 ou 2, comprenant trois inserts (10) adjacents recouvrant trois surfaces formant des plans généralement distincts.

4. Matrice selon la revendication 3, dans lequel les plans distincts sont disposés en forme de U.

5. Matrice selon l'une des revendications précédentes, dans laquelle les textures comprennent une pluralité d'éléments en creux ou en protubérance, venus de matière avec ladite matrice (1).

6. Matrice selon l'une des revendications 1 à 5, dans laquelle tout ou partie des textures (11) est formé par des cônes répartis dans la texture selon une densité au moins égale à un cône par millimètre carré (mm²), chaque cône ayant une section moyenne comprise entre 0,0005 mm² et 1 mm².

7. Matrice selon l'une des revendications 1 à 5, dans laquelle tout ou partie des textures (11) sont des stries sensiblement parallèles entre elles, le pas des stries dans le motif étant au plus égal à 0,5 mm, chaque strie ayant une largeur moyenne comprise entre 0,02 mm et 0,5 mm.

8. Matrice selon l'une des revendications 1 à 5, dans laquelle tout ou partie des textures forment des parallélépipèdes de côté compris entre 0,05 mm et 0,5 mm, de hauteur comprise entre 0,05 mm et 0,5 mm, la distance entre deux parallélépipèdes adjacents dans la texture étant comprise entre 0,05 mm et 0.5 mm.

9. Matrice selon l'une des revendications 1 à 5, dans laquelle les éléments en protubérance forment des brins, lesdits brins étant répartis dans le motif selon une densité au moins égale à un brin par millimètre carré (mm²), chaque brin ayant une section moyenne comprise entre 0,0005 mm² et 1 mm².

10. Matrice selon l'une des revendications 1 à 5, dans laquelle les éléments en protubérance forment des lames parallèles entre elles, le pas des lames dans le motif étant au plus égal à 0,5 mm, chaque lame ayant une largeur moyenne comprise entre 0,02 mm et 0,5 mm.

11. Matrice selon l'une des revendications 1 à 5, dans laquelle les éléments en creux ou en protubérance présentent des formes et des distances variables entre eux.

## Patentansprüche

1. Prägeplatte (1), welche ein Modell von Profilen eines Laufstreifens eines zu formenden Reifens darstellt, wobei die Prägeplatte aus einem Prägeplattenkörper (2) besteht, der mit Rillen versehen ist, und aus wenigstens einem an den Körper der Prägeplatte angesetzten Einsatz (10), der wenigstens eine der Flächen der Rillen (4) des Körpers (2) bedeckt, wobei der Einsatz (10) wenigstens eine mit Texturen versehene Fläche aufweist, wobei die Texturen durch 3D-Druck oder Laserbearbeitung oder mithilfe von Stempeln oder durch selektives Schmelzen von Metallpulver oder durch Elektroerosion hergestellt werden,
**dadurch gekennzeichnet, dass** die Oberfläche des Einsatzes im Wesentlichen eben ist, und dadurch, dass die Prägeplatte wenigstens zwei benachbarte Einsätze (10) umfasst, die zwei Flächen bedecken, die im Wesentlichen verschiedene Ebenen bilden, und dadurch, dass die verschiedenen Ebenen in L-Form angeordnet sind, und dadurch, dass die wenigstens zwei Einsätze (10) mit unterschiedlichen Texturen (11) versehen sind, und dadurch, dass die Einsätze unter Bedingungen, welche die Formgebung der Texturen ermöglichen, getrennt hergestellt werden und danach an den Körper der Prägeplatte angesetzt werden, und dadurch, dass die Befestigung der Einsätze durch Verschraubung erfolgt.

2. Prägeplatte nach Anspruch 1, wobei der Einsatz auch wenigstens eine der Flächen der Scheitel von Profilen des Körpers (2) bedeckt.

3. Prägeplatte nach einem der Ansprüche 1 oder 2, welche drei benachbarte Einsätze (10) umfasst, die drei Flächen bedecken, die im Wesentlichen verschiedene Ebenen bilden.

4. Prägeplatte nach Anspruch 3, wobei die verschiedenen Ebenen U-förmig angeordnet sind.

5. Prägeplatte nach einem der vorhergehenden Ansprüche, wobei die Texturen mehrere zurückversetzte oder vorstehende Elemente umfassen, die mit der Prägeplatte (1) stoffschlüssig verbunden sind.

6. Prägeplatte nach einem der Ansprüche 1 bis 5, wobei alle Texturen oder ein Teil davon (11) von Kegeln gebildet werden, die in der Textur mit einer Dichte verteilt sind, die wenigstens gleich einem Kegel pro Quadratmillimeter (mm²) ist, wobei jeder Kegel einen mittleren Querschnitt zwischen 0,0005 mm² und 1 mm² aufweist.

7. Prägeplatte nach einem der Ansprüche 1 bis 5, wobei alle Texturen oder ein Teil davon (11) Streifen sind, die im Wesentlichen parallel zueinander sind, wobei das Rastermaß der Streifen in dem Motiv höchstens gleich 0,5 mm ist, wobei jeder Streifen eine mittlere Breite zwischen 0,02 mm und 0,5 mm aufweist.

8. Prägeplatte nach einem der Ansprüche 1 bis 5, wobei alle Texturen oder ein Teil davon Quader mit einer Seitenlänge zwischen 0,05 mm und 0,5 mm und einer Höhe zwischen 0,05 mm und 0,5 mm bilden, wobei der Abstand zwischen zwei benachbarten Quadern in der Textur zwischen 0,05 mm und 0,5 mm liegt.

9. Prägeplatte nach einem der Ansprüche 1 bis 5, wobei die vorstehenden Elemente Fäden bilden, wobei diese Fäden in dem Motiv mit einer Dichte verteilt sind, die wenigstens gleich einem Faden pro Quadratmillimeter (mm²) ist, wobei jeder Faden einen mittleren Querschnitt zwischen 0,0005 mm² und 1 mm² aufweist.

10. Prägeplatte nach einem der Ansprüche 1 bis 5, wobei die vorstehenden Elemente Lamellen bilden, die zueinander parallel sind, wobei das Rastermaß der Lamellen in dem Motiv höchstens gleich 0,5 mm ist, wobei jede Lamelle eine mittlere Breite zwischen 0,02 mm und 0,5 mm aufweist.

11. Prägeplatte nach einem der Ansprüche 1 bis 5, wobei die zurückversetzten oder vorstehenden Elemente untereinander variable Formen und Abstände aufweisen.

## Claims

1. Die (1) representing a tread pattern model for a tread of a tyre to be moulded, said die being made up of a die body (2) provided with grooves and at least one insert (10) attached to the body of said die, covering at least one of the surfaces of the grooves (4) in the body (2), the insert (10) comprising at least one surface provided with textures, the textures being manufactured by 3D printing or laser machining, or with the aid of punches, or by selective fusion of metal powder, or by electrical discharge machining **characterized in that** the surface of the insert is substantially flat and **in that** the die comprises at least two adjacent inserts (10) covering two surfaces that form generally separate planes and **in that** the separate planes are disposed in an L shape and **in that** at least two inserts (10) are provided with different textures (11) and **in that** the inserts are manufactured separately, under conditions for shaping the textures, and then attached to the body of the die and **in that** fastening takes place by screwing.

2. Die according to Claim 1, wherein the insert also covers at least one of the surfaces of the tops of tread patterns on the body (2).

3. Die according to Claim 1 or 2, which comprises three adjacent inserts (10) covering three surfaces that form generally separate planes.

4. Die according to Claim 3, wherein the separate planes are disposed in a U shape.

5. Die according to one of the preceding claims, wherein the textures comprise a plurality of recessed or protruding elements formed integrally with said die (1).

6. Die according to one of Claims 1 to 5, wherein all or some of the textures (11) are formed by cones distributed through the texture at a density at least equal to one cone per square millimetre (mm²), each cone having a mean cross section of between 0.0005 mm² and 1 mm².

7. Die according to one of Claims 1 to 5, wherein all or some of the textures (11) are substantially mutually parallel striations, the spacing of the striations in the pattern being at most equal to 0.5 mm, each striation having a mean width of between 0.02 mm and 0.5 mm.

8. Die according to one of Claims 1 to 5, wherein all or some of the textures form parallelepipeds having a side length of between 0.05 mm and 0.5 mm and a height of between 0.05 mm and 0.5 mm, the distance between two adjacent parallelepipeds in the texture being between 0.05 mm and 0.5 mm.

9. Die according to one of Claims 1 to 5, wherein the protruding elements form strands, said strands being distributed through the pattern at a density at least equal to one strand per square millimetre (mm²), each strand having a mean cross section of between 0.0005 mm² and 1 mm².

10. Die according to one of Claims 1 to 5, wherein the protruding elements form mutually parallel blades, the spacing of the blades in the pattern being at most equal to 0.5 mm, each blade having a mean width of between 0.02 mm and 0.5 mm.

11. Die according to one of Claims 1 to 5, wherein the recessed or protruding elements exhibit mutually variable shapes and distances.
